# FASCICULE DE BREVET EUROPEEN

(11) **EP 3 378 729 B1**
(45) Date de publication et mention de la délivrance du brevet: **07.12.2022**
(21) Numéro de dépôt: 18157267.8
(22) Date de dépôt: 16.02.2018
(51) Int. Cl.: B62B 3/14, B62B 7/06, B62B 7/08

(54) **VOITURE D'ENFANT PLIANTE À CHARIOTS COULISSANTS**
ZUSAMMENKLAPPBARES KINDERAUTO MIT VERSCHIEBBAREN GLEITSCHLITTEN
FOLDING TOY CAR WITH SLIDING CARRIAGES

(30) Priorité: 14.03.2017 FR 1752071
(43) Date de publication de la demande: 26.09.2018
(73) Titulaire: Dorel France, 49309 Cholet Cedex (FR)
(72) Inventeur: LELAURE, Xavier, 85290 MORTAGNE SUR SEVRE (FR); NASLAIN, Yann, 49300 CHOLET (FR); WU, Tse-Chien, 80249 Kaohsiung City (TW); YANG, Bo-Wen, 600 Chiayi City (TW)
(74) Mandataire: Vidon Brevets & Stratégie

(56) Documents cités:
- EP-A1- 2 243 683
- EP-A2- 1 946 991
- WO-A1-03/086834
- WO-A1-2006/114174

## Description

### 1. Domaine de l'invention

Le domaine de l'invention est celui de la puériculture, et en particulier des poussettes pour enfant, ou « voitures d'enfant » (ces termes englobent tous les dispositifs de puériculture munis de roues et aptes à transporter un ou plusieurs enfants).

L'invention concerne plus précisément les voitures d'enfant pliantes.

En particulier, l'invention concerne une voiture d'enfant dont le pliage est déclenché par le coulissement des poussoirs par rapport aux montants avant.

### 2. Art antérieur

De nombreuses techniques de pliage de poussettes ont été développées et sont aujourd'hui connues de l'art antérieur.

D'une façon générale, on cherche à concilier un ou plusieurs des objectifs suivants :
- l'efficacité du pliage, l'encombrement de la poussette pliée devant être le plus réduit possible de façon à faciliter d'une part son stockage et d'autre part son transport, par exemple dans un véhicule automobile ;
- la simplicité des manipulations de pliage et dépliage, notamment le pliage à une main ;
- la solidité de la poussette, assurant également la sécurité de l'enfant transporté ;
- le coût de fabrication.

Parmi les différentes techniques de pliage connues, on connaît une première technique dite de pliage « cassé » selon laquelle les bras poussoirs basculent par rapport aux montants avant lors du pliage à partir d'une position dans laquelle ils se trouvent sensiblement dans le prolongement des montants avant.

On connaît également une seconde technique de pliage selon laquelle les bras poussoirs peuvent coulisser parallèlement aux montants avant entre une position déployée où les bras poussoirs prolongent sensiblement les montants avant, et une position repliée où chaque bras poussoir se retrouve superposé au le montant avant correspondant.

Le Demandeur a notamment développé une solution, divulguée dans le document EP1494911, qui prévoit, selon le mode de réalisation décrit, que le montant avant présente sur toute sa longueur un coulisseau orienté vers le haut et le bras poussoir, qui se déplace en coulissement au-dessus du montant avant, présente un rail, ou une glissière, correspondant. Ainsi, l'assemblage « rail / coulisseau » maintien et guide efficacement le déplacement du bras poussoir par rapport au montant avant.

Cependant, cette approche présente un inconvénient, notamment esthétique, puisque le coulisseau, qui est une pièce fonctionnelle dont la forme est dictée par la fonction, est visible sur les montants avant lorsque la poussette est dans sa position dépliée. Les designers et les utilisateurs souhaitent disposer de poussettes présentant une esthétique simple et fluide, sans qu'un tel coulisseau (et/ou le rail correspondant) soit fortement visible.

Par ailleurs, si la longueur importante de la liaison rail/coulisseau est un avantage en terme de solidité et de résistance, elle peut introduire des problèmes de fiabilité dans le temps : des blocages ou des frottements gênants peuvent apparaître, si l'ajustement n'est pas parfait.

Il serait souhaitable de disposer d'un mécanisme de pliage qui soit durable et efficace, et donc peu sujet aux effets d'un usage intensif tels que l'usure ou l'apparition de jeux.

Il serait également avantageux que les éléments fonctionnels permettant le guidage en coulissement des bras poussoirs ne soient pas, ou soient peu, visibles, de façon à permettre un design lisse et fluide. Le document WO2006/114174 A1 montre un autre exemple d'une voiture d'enfant.

### 3. Exposé de l'invention

La présente invention a notamment pour objectif de pallier ces inconvénients de l'art antérieur.

Cet objectif, ainsi que d'autres qui apparaîtront par la suite, est atteint à l'aide d'une voiture d'enfant pliante comprenant, sur chacun de ses côtés, un ensemble formé de deux éléments mobiles en translation l'un par rapport à l'autre, lesdits éléments étant un montant avant et un bras poussoir,

Selon l'invention, un premier desdits éléments de chaque ensemble comporte une glissière formée dans la longueur dudit premier élément et présentant une ouverture sensiblement orientée vers l'ensemble situé de l'autre côté dudit châssis, et un second desdits éléments est solidaire d'un chariot portant un coulisseau mobile dans ladite glissière, lesdits éléments étant maintenus parallèles et sensiblement l'un au-dessus de l'autre avec un espace prédéterminé entre eux lors de l'opération de pliage/dépliage de la poussette.

Ainsi, le chariot forme une pièce de liaison, et selon certains modes de réalisation l'unique pièce de liaison, entre le premier élément et le second élément de chaque ensemble, la liaison formant un assemblage « rail (partie femelle) / coulisseau (partie mâle) », ou « glissière / coulisseau ». Les glissières sont orientées sensiblement l'une vers l'autre, c'est-à-dire vers l'intérieur de la poussette, et ne sont pas, ou peu, visibles, en particulier lorsqu'un hamac ou un autre support d'enfant est présent sur le châssis.

Vus de l'extérieur, les montants avant et les bras poussoirs peuvent être lisses, par exemple ronds ou ovales, sans protubérance ni éléments fonctionnels visibles et s'étendant sur une grande longueur. On améliore ainsi l'aspect esthétique de la poussette et de son châssis, le designer disposant d'une plus grande latitude.

Les montants avant et le bras poussoir se trouvent l'un au-dessus de l'autre (selon les modes de réalisation, le bras poussoir peut se trouver au-dessus ou en-dessous), sans contact direct entre eux, un espace étant ménagé entre eux). Ils se trouvent donc superposés, ou sensiblement superposés, un léger décalage du poussoir par rapport à un plan vertical passant par le montant avant étant possible. Ce décalage éventuel, ainsi que le décalage en hauteur entre les deux éléments, sont assurés par le chariot.

Le chariot, et le coulisseau correspondant, peuvent s'étendre sur une longueur relativement importante, par exemple entre 8 et 15 cm, ce qui permet de garantir un bon fonctionnement et une bonne fiabilité, et de remédier à d'éventuels problèmes de porte-à-faux connus de l'art antérieur.

Ledit espace prédéterminé peut ménager une distance comprise entre 1 et 6 millimètres entre lesdits éléments, notamment entre 1 et 3 mm, suffisamment faible pour éviter notamment les risques de pincement.

Les montants avant peuvent porter une roue ou un bloc de roues à leur extrémité inférieure, pour former une poussette de type « à quatre roues ». Selon une variante « à trois roues », les montants peuvent se rejoindre en leurs parties inférieures ou porter une traverse, pour porter une roue ou un bloc de roues unique, en position centrale.

Selon un mode de réalisation particulier, le premier des éléments est un montant avant et le second des éléments est un bras poussoir.

Ainsi, les chariots fixés aux bras poussoirs peuvent coulisser le long des glissières ménagées dans les montants avant.

Selon un mode de réalisation alternatif, le premier des éléments est un bras poussoir et le second des éléments est un montant avant.

Il est à noter que le coulisseau peut être formé d'un unique élément ou de plusieurs éléments (deux ou plus).

Ainsi, selon un mode de réalisation particulier, le coulisseau peut comprendre au moins un patin de guidage.

Un tel patin est adapté pour se déplacer efficacement dans la glissière ménagée dans le montant avant correspondant. Sa forme et/ou son matériau pourront être choisis pour assurer un bon coulissement, en limitant les frottements et/ou en autorisant les jeux de fonctionnement.

Selon un autre mode de réalisation, le coulisseau peut comprendre au moins un galet mobile en rotation.

Le ou les galets roulent dans la glissière, pour assurer le déplacement efficace du chariot.

Selon un autre aspect, la voiture d'enfant peut comprendre des moyens de verrouillage dans au moins une position d'au moins un des chariots par rapport aux montants avant.

Ce verrouillage peut notamment être mis en œuvre dans une ou plusieurs positions, par exemple une position dépliée et une position pliée.

Selon un aspect spécifique, les moyens de verrouillage comprennent au moins un pion de verrouillage, apte à coopérer avec au moins un logement de verrouillage prévu à cet effet dans la glissière correspondante.

Selon un mode de réalisation particulier, la glissière comprend au moins deux logements de verrouillage, correspondant respectivement à une position pliée et à une position dépliée de la voiture d'enfant.

Selon un mode de réalisation spécifique, le pion est mobile perpendiculairement à l'axe du montant avant, pour passer d'une position verrouillée à une position déverrouillée, sous l'action d'un câble de déverrouillage.

Selon un mode de réalisation particulier, les bras poussoirs forment les montants latéraux d'un cadre comprenant en outre une traverse supérieure formant guidon et une traverse inférieure.

Cette configuration permet notamment la mise en place d'un siège d'appoint en utilisant la traverse inférieure.

Selon un aspect particulier, la voiture comprend deux montants arrière dont une extrémité inférieure est reliée à moins une roue arrière ou un bloc de roues arrière, et dont une extrémité supérieure est montée libre en pivotement sur ledit chariot.

Ainsi, le pivotement des montants arrière est entraîné par le déplacement des poussoirs au moment des opérations de pliage/dépliage.

Selon un autre mode de réalisation, chacun des chariots porte un premier élément d'accrochage apte à coopérer avec un second élément complémentaire porté par un support d'enfant.

Cet élément d'accrochage peut notamment être un connecteur, mâle ou femelle, ou être prévu pour recevoir un tel connecteur.

Selon un autre aspect, les poussoirs sont chacun formés de deux portions télescopiques.

La hauteur des poussoirs peut ainsi facilement être réglée, par coulissement d'une première portion télescopique par rapport à une deuxième portion.

### 4. Liste des figures

D'autres caractéristiques et avantages de l'invention apparaîtront plus clairement à la lecture de la description suivante de différents modes de réalisation de l'invention, donnée à titre d'exemples illustratifs et non limitatifs, au regard des dessins annexés parmi lesquels :
- la **figure 1** est une vue en trois dimensions d'une poussette pour enfant selon un premier mode de réalisation de l'invention ;
- les **figures 2A et 2B** sont des vues latérales de la poussette de la figure 1, respectivement depuis l'extérieur de la poussette (figure 2A) et depuis l'intérieur de la poussette (figure 2B) ;
- les **figures 3A et 3B** illustrent, respectivement en coupe et en trois dimensions, un premier mode de réalisation de la liaison entre le chariot coulissant et la glissière, mettant en œuvre un patin de guidage et une glissière de profils sensiblement rectangulaires ;
- les **figures 4A et 4B** illustrent, respectivement en coupe et en éclaté, un second mode de réalisation de la liaison entre le chariot coulissant et la glissière, mettant en œuvre un patin de guidage et une glissière de profils sensiblement cruciformes ;
- les **figures 5A et 5B** illustrent, respectivement en coupe et en éclaté, un troisième mode de réalisation de la liaison entre le chariot coulissant et la glissière, mettant en œuvre un patin de guidage de profil sensiblement rectangulaire et une glissière de profil sensiblement en X ;
- les **figures 6A et 6B** illustrent, selon deux angles de vue différents, un quatrième mode de réalisation de la liaison entre le chariot coulissant et la glissière, le patin de guidage étant remplacé par des galets roulant dans la glissière ;
- la **figure 7** est une vue en trois dimensions du mécanisme de déverrouillage du pliage présent à l'intérieur du chariot, comprenant notamment un câble relié à une came, et un pion de verrouillage ;
- les **figures 8A et 8B** illustrent le mécanisme de déverrouillage de la figure 7, respectivement dans une position verrouillée (figure 8A) et une position déverrouillée (figure 8B) ;
- les **figures 9A à 10C** illustrent la poignée de la poussette comportant un bouton principal et un bouton subsidiaire permettant d'actionner un câble pour le réglage en hauteur des poussoirs un câble pour la mise en action du mécanisme de déverrouillage :

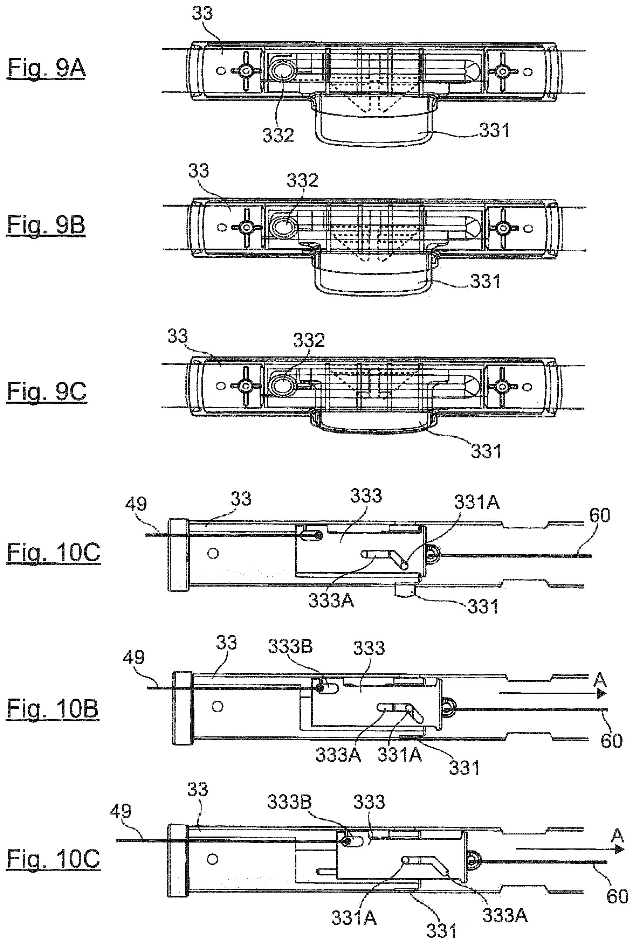

   - **figure 9A** : position de repos, aucun des deux boutons n'étant actionné ;
   - **figure 9B** : actionnement du bouton principal jusqu'à un premier palier pour le réglage en hauteur des poussoirs ;
   - **figure 9C** **:** actionnement du bouton subsidiaire conjointement à l'actionnement du bouton principal jusqu'à un second palier pour l'actionnement du mécanisme de déverrouillage ;
   - **figure 10A** **:** position de repos de la figure 9A, aucun des deux câbles n'étant actionné ;
   - **figure 10B** **:** actionnement du câble pour le réglage en hauteur des poussoirs selon la figure 9B ;
   - **figure 10C** **:** actionnement du câble pour la mise en action du mécanisme de déverrouillage selon la figure 9C ;

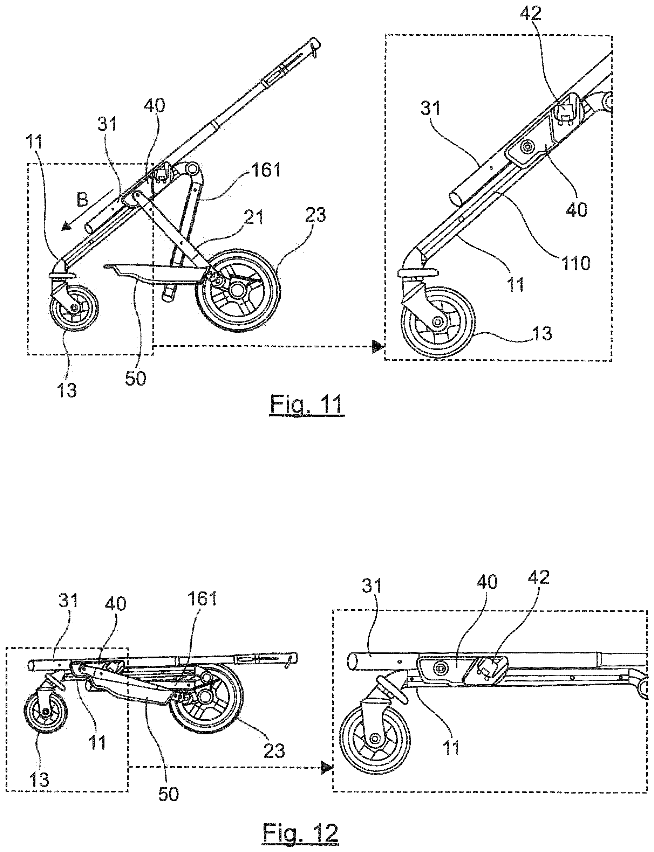

- la **figure 11** illustre la disposition des éléments (montants avant, montants arrière, chariot coulissant, poussoirs, etc.) de la poussette en position dépliée ;
- la **figure 12** illustre la disposition des éléments (montants avant, montants arrière, chariot coulissant, poussoirs, etc.) de la poussette en position pliée ;

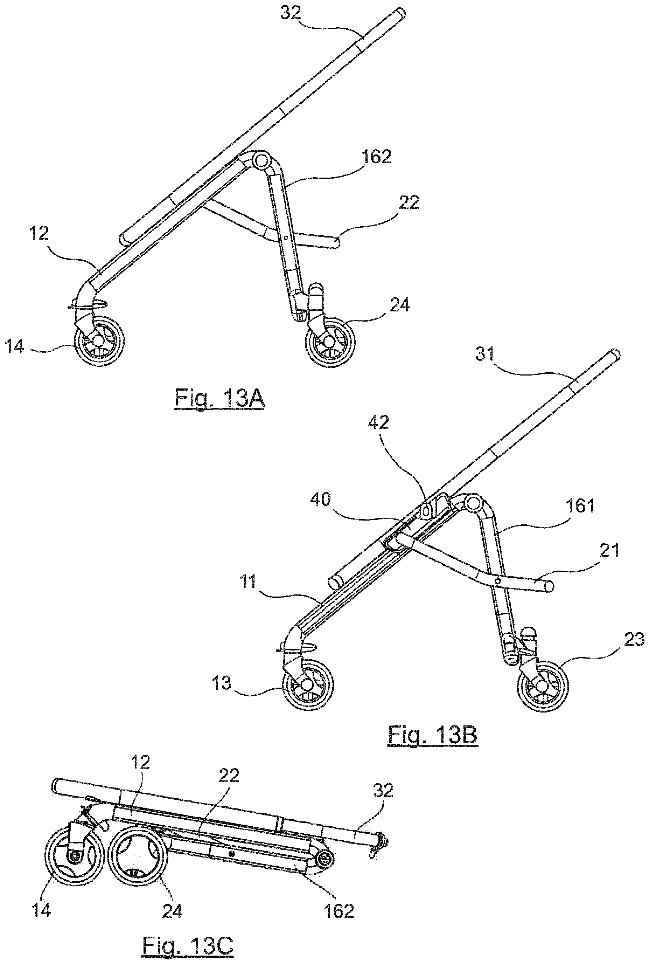

- les **figures 13A à 13C** sont des vues latérales de la poussette selon un second mode de réalisation, respectivement depuis l'extérieur de la poussette (figure 13A et 13C) et depuis l'intérieur de la poussette (figure 13B), la figure 13C illustrant la poussette en position repliée ;

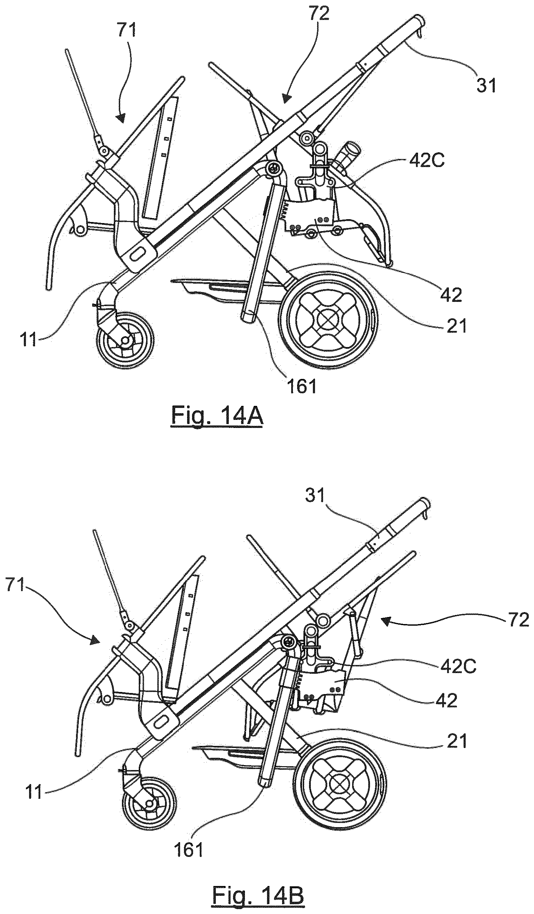

- les **figures 14A et 14B** illustrent la poussette selon le premier mode de réalisation de l'invention, munie de deux supports pour enfant, le support arrière pouvant être installé dans deux orientations distinctes.

### 5. Description détaillée

### 5.1 Principe général

Le principe général de l'invention repose sur une nouvelle approche du guidage en coulissement des poussoirs lors d'une opération de pliage/dépliage d'une poussette, ou voiture d'enfant.

Le châssis d'une poussette pliante selon l'invention comporte deux montants avant portant chacun au moins une roue avant ou un bloc de roues avant (par exemple deux roues appairées) et deux bras poussoirs, ou poussoirs, le cas échéant reliés par leurs extrémités supérieures de manière à former un guidon.

Chaque côté du châssis présente ainsi un ensemble formé de deux éléments solidaires et mobiles en translation l'un par rapport à l'autre, un bras poussoir, ou poussoir, et un bras avant.

Dans le mode de réalisation illustré, chaque poussoir s'étend au moins partiellement au-dessus du montant avant, c'est-à-dire qu'il est au moins partiellement superposé, avec le montant avant correspondant.

Dans des variantes, chaque poussoir peut être monté de façon à se déplacer sous le montant avant. Il peut également être légèrement décalé, par rapport au plan vertical passant par le montant avant.

Dans tous les cas, le poussoir et le montant avant sont assemblés l'un au dessus de l'autre (décalés en hauteur), ou superposés, et sont sensiblement parallèles. Ils sont légèrement éloignés l'un de l'autre de façon à ce qu'un espace (de quelques millimètres, par exemple 1 à 6 mm, notamment 1 à 3 mm) subsiste entre eux.

Selon les cas, le poussoir peut être placé au-dessus ou en-dessous du montant avant.

Dans les modes de réalisation illustrés, le poussoir et le montant avant se trouvent dans un même plan vertical. Ils pourraient cependant être légèrement décalés l'un par rapport à l'autre, par rapport à un tel plan vertical.

Chaque poussoir est ainsi mobile parallèlement à un des montants avant, de façon que les poussoirs coulissent le long des montants avant lors de l'opération de pliage/dépliage de la poussette.

Selon l'invention, ce déplacement est rendu possible grâce à l'utilisation d'une paire de chariots fixés respectivement à chacun des poussoirs, et se déplaçant par rapport aux montants avant correspondants.

Le chariot constitue la principale liaison entre le poussoir et le montant avant. Selon le mode de réalisation illustré notamment, il s'agit de l'unique liaison entre ceux-ci.

Plus précisément, les montants avant portent chacun une glissière, ou rainure ou rail, formée dans leur longueur, dans laquelle peut circuler un coulisseau (le cas échéant formé de plusieurs éléments) porté par chacun des chariots.

Ce système permet que les poussoirs soient guidés, par l'intermédiaire du chariot et de son coulisseau, le long des montants avant, entre une position dépliée et une position pliée.

La longueur, la forme, le guidage et le matériau formant le coulisseau peuvent être choisis pour que les problèmes de porte-à-faux soient minimisés.

Par ailleurs, les glissières sont formées sur les faces internes des montants, à savoir qu'une glissière formée sur un premier montant avant présente une ouverture sensiblement orientée vers l'intérieur de la poussette, vers (ou sensiblement vers) l'ouverture de la glissière formée sur le second montant avant.

De cette façon, les glissières ne sont pas ou peu visibles depuis l'extérieur de la poussette, ce qui permet d'allier l'efficacité et la robustesse de ce mécanisme de pliage à l'esthétique de la poussette.

Selon une alternative, les chariots peuvent être respectivement fixés sur chacun des montants avant, et se déplacent dans des glissières (ou rainures, ou rails) formées respectivement dans chacun des bras poussoirs.

Lors du pliage, les glissières sont guidées en coulissement par les chariots, de façon à permettre le coulissement des bras poussoirs par rapport aux montants avant.

Les glissières sont alors formées sur les faces internes des bras poussoir, leur ouverture étant sensiblement orientée vers l'intérieur de la poussette, c'est-à-dire vers (ou sensiblement vers) l'ouverture de la glissière formée sur le second poussoir.

### 5.2 Description d'un mode de réalisation de l'invention

### 5.2.1 Structure générale de la poussette

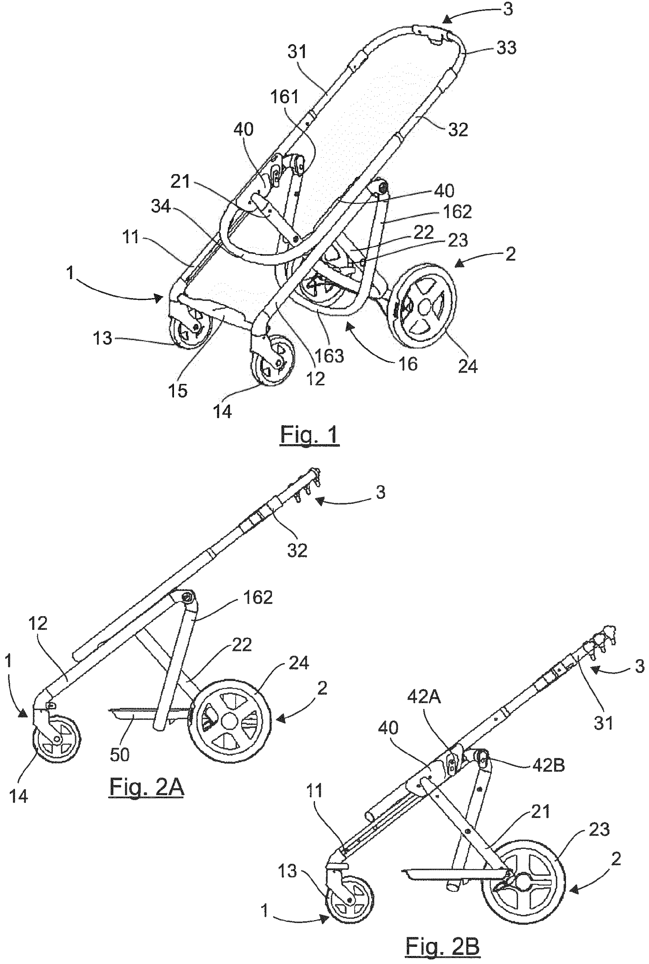

La **figure 1** représente une poussette constituée d'un châssis comprenant trois sous-ensembles distincts 1 (« avant »), 2 (« arrière »), 3 (« poignée »).

Un premier sous-ensemble « avant » 1 comprend deux montants avant 11, 12 portant deux roues avant 13, 14 et reliés entre eux par une traverse 15 située au voisinage des roues 13, 14, formant ici un repose-pieds.

Les montants avant pourraient aussi porter chacun plusieurs roues, par exemple une paire de roues.

Les montants avant pourraient également ne porter qu'une unique roue (ou bloc de roues) avant à eux deux. En addition des deux roues arrière, la poussette aurait par conséquent trois roues.

Un deuxième sous-ensemble « arrière » 2 comporte deux bielles arrière 21, 22 portant chacune une roue arrière 23, 24 (ou éventuellement plusieurs roues arrière).

Chaque bielle 21, 22 est articulée en deux points, d'une part par rapport à deux montants 161, 162 d'un élément de châssis 16 en forme générale de « U » composé de ces deux montants 161, 162 articulés par rapport aux montants avant 11, 12 et reliés entre eux par une portion transversale 163, et d'autre part par rapport à un troisième sous-ensemble « poignée » 3.

Les bielles 21, 22 permettent ainsi de contrôler le déplacement de l'élément de châssis en « U » 16.

Le troisième sous-ensemble « poignée » 3 est formé, dans ce mode de réalisation, d'un cadre comportant une barre de préhension 33 permettant de déplacer et guider la poussette et reliée à deux bras poussoirs (ou montants latéraux) 31, 32 et une traverse inférieure 34 en partie basse.

Dans le mode de réalisation décrit, ce troisième sous-ensemble « poignée » 3 est constitué de deux portions en U, pouvant coulisser de façon télescopique l'une par rapport à l'autre, de manière à régler la poignée à une hauteur adaptée à son utilisateur.

Les poussoirs 31, 32 sont munis chacun d'un chariot 40 formant une pièce de liaison, entre les poussoirs 31, 32 et les montants avant 11, 12, pour le coulissement des poussoirs le long de ces montants avant.

Les chariots 40 sont fixés sur le côté intérieur des poussoirs, à proximité de la traverse inférieure 34.

Comme visible sur les **figures 1 et 2B****,** les bielles 21, 22 du deuxième sous-ensemble « arrière » 2 sont articulées librement sur leurs chariots 40 respectifs.

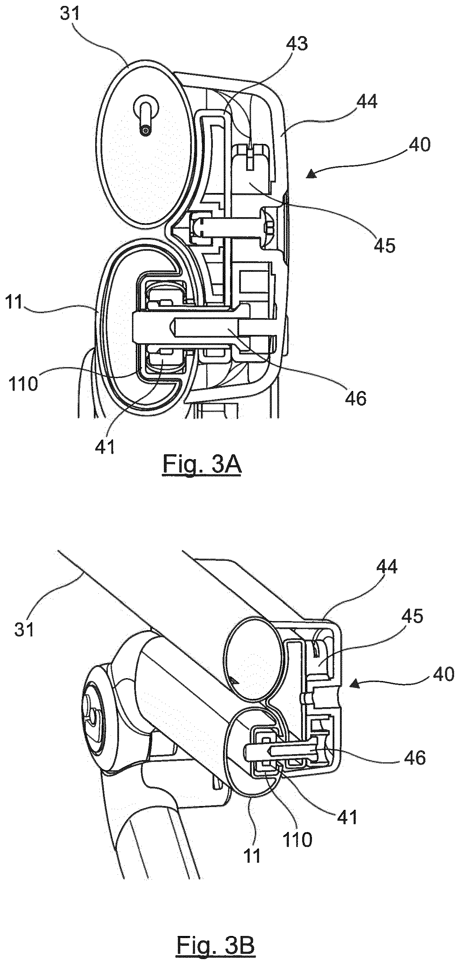

Ainsi, le mouvement de translation des chariots (et en des poussoirs) entraîne les bielles 21, 22 en rotation lors des opérations de pliage/dépliage, comme décrit plus loin en lien avec les figures 3 à 6.

Les montants avant 11, 12 comportent chacun une glissière 110, 120 orientée vers l'intérieur de la poussette (c'est-à-dire que chaque glissière 110, 120 présente une ouverture orientée vers le montant avant opposé) et adaptée pour guider en coulissement le chariot 40 correspondant.

Le chariot 40 comporte pour cela un coulisseau 41, complémentaire à la glissière 110, 120, dont plusieurs modes de réalisation sont décrits plus en détails au paragraphe 5.2.2.

Chaque glissière 110, 120 est de préférence formée sur la totalité de la longueur des montants avant 11, 12, ou au moins sur une portion substantielle de cette longueur (il peut ne pas être nécessaire que la glissière se prolonge en partie basse, et la fin de cette glissière peut le cas échéant servir de butée pour un siège d'appoint - voir figures 14A et 14B).

La poussette peut également être munie d'accessoires divers, comme un plateau support 50, qui n'ont toutefois pas d'influence sur les opérations de pliage/dépliage de la poussette.

Un ou plusieurs sièges pour enfant, ou une nacelle ou une coque, peuvent également être montés amovibles sur le châssis de la poussette. Les deux chariots 40 comportent pour cela des éléments de connexion, par exemple de type Moduloclip^{®} 42, représentés sur les **figures 11 et 12**, destinés à coopérer avec des éléments de connexion complémentaires formés sur un support pour enfant (non représenté).

Une variante d'élément de connexion 42 est représentée sur la **figure 2B****,** comportant deux coulisseaux de fixation 42A, 42B aptes à coopérer avec une glissière ménagée dans un connecteur, par exemple de type Moduloclip^{®}.

Le coulisseau de fixation « avant » 42A est fixé sur le chariot 40 tandis que le second coulisseau « arrière » 42B est fixé un peu en arrière du coulisseau de fixation 42A, en partie supérieure des montants avant 11, 12.

Le premier coulisseau de fixation 42A permet notamment de recevoir un support d'enfant, par exemple un siège auto unique, tandis que le second coulisseau de fixation 42B permet de connecter un support d'enfant, par exemple un siège auto, principal alors qu'un siège d'appoint peut être conjointement fixé à l'avant de la poussette.

Un exemple d'un tel siège d'appoint 71 est représenté sur les **figures 14A et 14B****.**

Il peut par exemple être monté en appui sur la traverse 34 du troisième sous-ensemble « poignée » 3 et sur les montants 11, 12.

Les **figures 14A et 14B** illustrent une autre variante des éléments de connexion 42 comportant une zone de fixation aux montants 161, 162 (par exemple par vissage ou clippage) et zone de connexion 42C permettant de monter de façon déportée vers l'arrière de la poussette un siège pour enfant 72.

L'invention peut également être mise en oeuvre dans un autre type de poussette, comme celle représentée sur les **figures 13A à 14****.**

La structure de cette poussette varie légèrement par rapport à celle précédemment décrite en ce que les roues arrière 23, 24 sont portées par les montants 161, 162 de l'élément de châssis 16 articulés par rapport aux montants avant 11, 12.

Les bielles 21, 22 sont articulées en deux points, d'une part par rapport à ces montants 161, 162, et d'autre part par rapport aux chariots 40.

En revanche, leurs extrémités inférieures sont libres ou reliées entre elles par une traverse.

### 5.2.2 Liaison entre le chariot et la glissière

Les **figures 3A à 6B** illustrent quatre modes de réalisation distincts de la liaison chariot/glissière permettant le coulissement des chariots 40 dans la glissière 110, 120 correspondante du montant avant 11, 12.

Dans tout ce qui suit, les mêmes références numériques sont utilisées pour désigner les éléments communs aux différents modes de réalisation, même si leur forme générale varie.

Comme représenté sur les vues en coupe des **figure 3A****,** **4A****,** **5A****,** le chariot 40 est fixé sur un côté interne du poussoir 31 correspondant.

La forme interne du chariot 40 est adaptée pour épouser les profils successifs du poussoir 31 et du montant avant 11, de façon notamment à ne pas laisser apparaître d'interstice dans lequel un enfant serait susceptible de mettre ses doigts, ce qui pourrait entraîner des pincements ou blessures plus ou moins graves.

Pour cela, le corps du chariot 40 comporte une pièce structurante 43 allongée dont le profil forme d'un côté sensiblement un V aplati, par exemple en aluminium, placée contre le poussoir 31 et le montant avant 11.

Cette pièce de support 43 est montée solidaire du poussoir 31, par soudage, ou par tout autre moyen de fixation adapté (vissage, rivetage, etc.).

Elle est hébergée à l'intérieur d'un boîtier 44, qui abrite également le mécanisme de verrouillage/déverrouillage des poussoirs, à savoir une came 45 et un pion de verrouillage 46.

Le coulisseau 41 de coulissement est assemblé à la pièce 43 (ou directement formé dans cette pièce).

Il est traversé, dans ce mode de réalisation, par un pion de verrouillage 46 dont le rôle est d'assurer le blocage des poussoirs 31, 32 dans une ou plusieurs positions verrouillées par rapport aux montants avant 11, 12.

Le fonctionnement de ce pion 46 et du système de déverrouillage est décrit plus en détails au paragraphe 5.4.3.

Les **figures 3A et 3B** illustrent un premier mode de réalisation dans lequel le coulisseau 41 du chariot 40 est un patin présentant un profil sensiblement rectangulaire et coopérant avec une glissière 110, 120 de profil sensiblement rectangulaire.

Le patin 41 présente ici plus particulièrement un profil sensiblement rectangulaire avec des bords légèrement bombés, soit une forme légèrement ovoïde ou ellipsoïde.

Ceci permet notamment de limiter la surface de frottement et/ou d'assurer la présence d'un jeu entre le patin 41 et la glissière 110, de façon à éviter tout risque de blocage des poussoirs lors des opérations de pliage/dépliage.

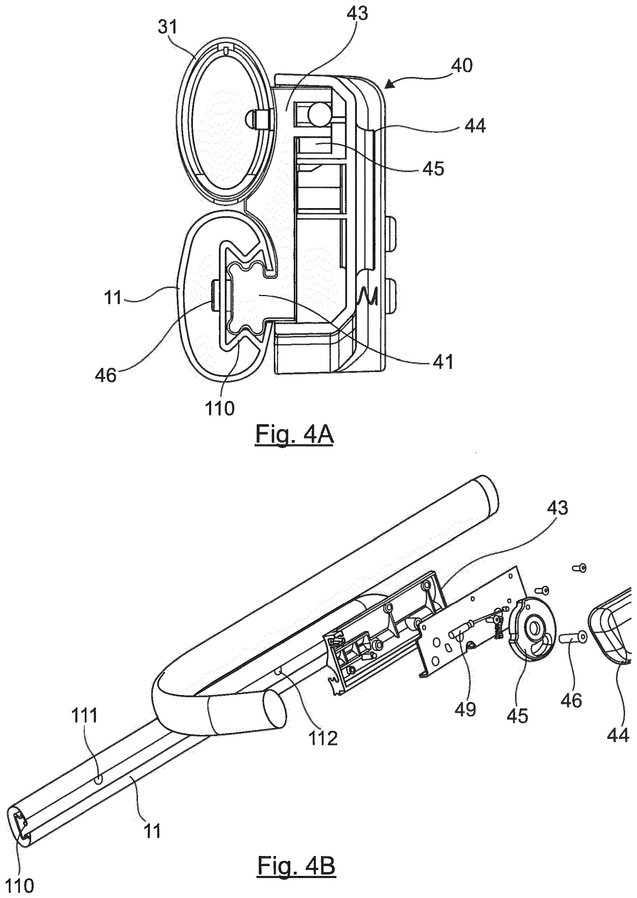

Les **figures 4A et 4B** illustrent un deuxième mode de réalisation qui diffère du premier en ce que le coulisseau 41 du chariot 40 est un patin présentant un profil sensiblement cruciforme et coopérant avec une glissière 110, 120 de profil sensiblement cruciforme.

La glissière 110, 120 présente plus précisément une surface de fond de glissière et deux parois latérales, dont la section forme, en partie supérieure et en partie inférieure, sensiblement un V dont la pointe est orientée vers l'intérieur de la glissière.

Le patin 41 présente une section sensiblement complémentaire avec les parois latérales, un jeu étant toutefois ménagé entre les deux éléments pour permettre le bon fonctionnement du système.

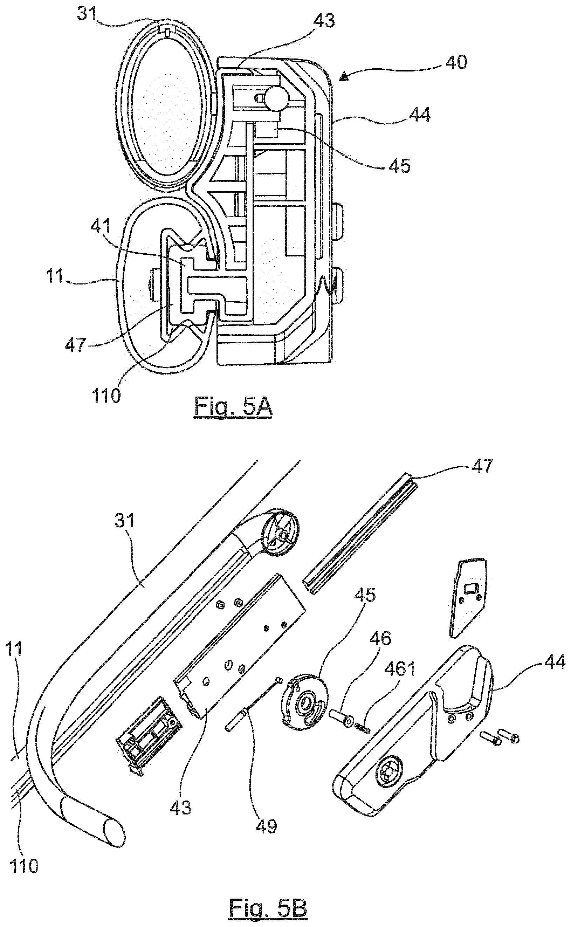

Les **figures 5A et 5B** illustrent un troisième mode de réalisation dans lequel le coulisseau 41 du chariot 40 est un patin présentant un profil sensiblement rectangulaire et coopérant avec une glissière 110, 120 de profil sensiblement identique à celui du deuxième mode de réalisation.

Ainsi, la glissière 110, 120 présente comme dans le mode de réalisation précédent une surface de fond de glissière et deux parois latérales, dont la section de chacune forme sensiblement un V dont la pointe est orientée vers l'intérieur de la glissière.

Le coulisseau 41 est formé directement dans la pièce principale 43, et recouvert d'un revêtement 47, par exemple en plastique, présentant une section sensiblement rectangulaire, et qui se déforme au contact des pointes des V de la glissière, améliorant le coulissement et/ou la fiabilité.

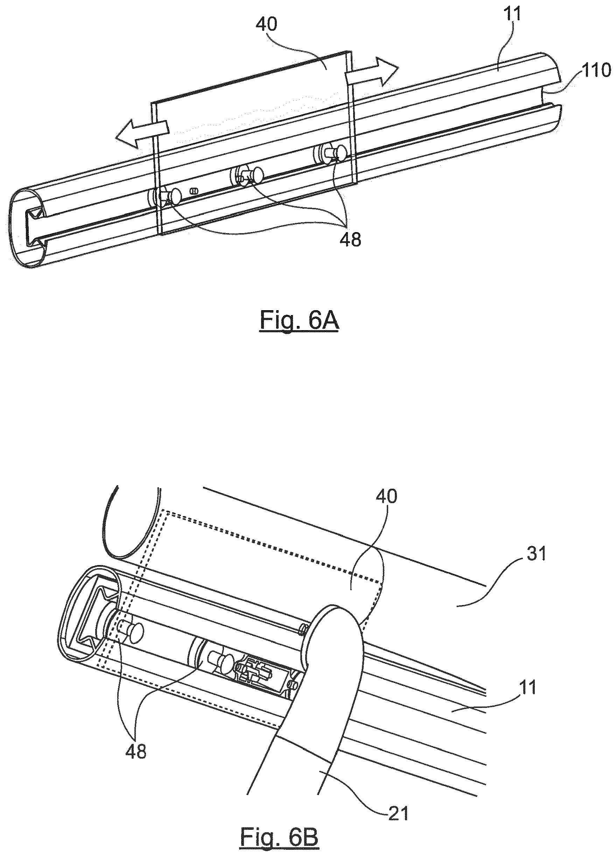

Les **figures 6A et 6B** illustrent un quatrième mode de réalisation dans lequel le coulisseau du chariot 40 comporte une pluralité (ici trois) de galets 48 adaptés pour rouler dans une glissière 110, 120 de profil sensiblement cruciforme.

### 5.2.3 Mécanisme de verrouillage/déverrouillage des poussoirs

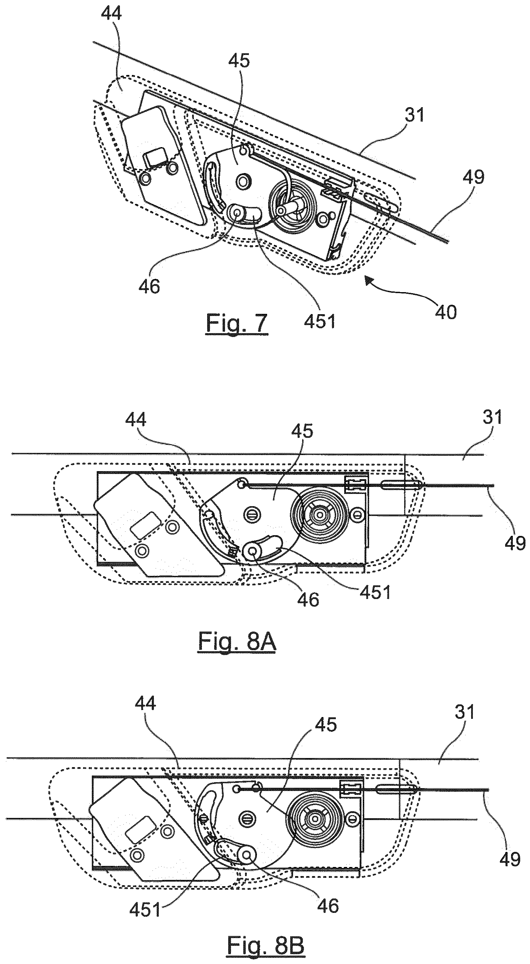

Les **figures 7 à 8B** représentent schématiquement l'intérieur du boîtier 44 du chariot 40 et les éléments qui composent le mécanisme de verrouillage/déverrouillage des poussoirs 30, 31.

Ce mécanisme de verrouillage/déverrouillage est compatible avec tous les modes de réalisation de la liaison entre le patin et la glissière décrits précédemment.

Le boîtier 44 comporte ainsi une came 45 reliée à un câble 49, actionné par un système de commande situé sur la poignée 33 de la poussette.

La came 45, de fonctionnement classique, est mobile en rotation sous l'effet du déplacement longitudinal du câble 49. Elle comporte une lumière 451 à bords inclinés, à l'intérieur de laquelle est monté traversant le pion de verrouillage 46.

Le mouvement de rotation de la came 45 est ainsi transformé en mouvement de translation du pion 46, perpendiculairement à l'axe de rotation de la came.

Comme illustré sur la **figure 4B**, les montants avant 11, 12 - et plus particulièrement les glissières 110, 120 - comportent deux orifices ou lumières 111, 112 destinés à recevoir le pion de verrouillage 46, dans deux positions spécifiques de la poussette.

L'orifice 111 correspond au verrouillage de la poussette dans une position pliée, tandis que l'orifice 112 correspond au verrouillage de la poussette dans une position dépliée.

Lorsque le pion 46 se décale sous l'effet de la rotation de la came 45, il est libéré de l'orifice dans lequel il est inséré : il passe donc d'une position verrouillée à une position déverrouillée, permettant le coulissement du chariot.

Les **figures 8A et 8B** représentent plus précisément les deux positions extrêmes du pion de verrouillage 46 au sein de la lumière 451, c'est-à-dire la position verrouillée (figure 8A) et la position déverrouillée (figure 8B).

Lorsque le pion 46 est dans une position déverrouillée, l'utilisateur peut faire translater les poussoirs 30, 31 le long des montants avant, le pion frottant contre la glissière 110 jusqu'à ce que le second orifice de verrouillage soit atteint.

Un ressort 461 situé à l'arrière du pion 46 (visible sur la figure 5B), tend à ramener le pion dans une position de repos, c'est-à-dire d'une position déverrouillée à une position verrouillée.

L'actionnement du câble 49, et donc le déverrouillage des poussoirs 30, 31, s'effectue à partir de la poignée 33 de la poussette.

Les **figures 9A à 10C** illustrent pour cela la poignée 33 de la poussette, qui est munie d'un premier bouton 331 et d'un second bouton 332.

Le bouton principal 331 peut être actionné en deux étapes: une première étape permettant à l'utilisateur de régler en hauteur les poussoirs 30, 31, et une seconde étape permettant de déverrouiller les poussoirs, en appuyant conjointement sur le second bouton 332.

Les **figures 9A et 10A** représentent le système au repos.

Le mécanisme comporte une pièce interne 333, ou coulisseau, apte à coulisser à l'intérieur de la poignée 33, lorsque les boutons 331, 332 sont actionnés.

Ce coulisseau 333 comporte une lumière 333A comportant une première portion parallèle à la direction de coulissement, et une seconde portion inclinée formant avec la première portion un angle compris entre 130 et 145°, ici 135°.

Le coulisseau 333 comprend également à chacune de ses extrémités une zone de liaison avec un câble : un premier câble 49 permettant d'actionner le déverrouillage du pion de verrouillage 46, et un second câble 60 permettant d'actionner le déverrouillage d'une première partie des poussoirs télescopique par rapport à une seconde partie.

Le câble 49 est disposé à l'intérieur d'une rainure supérieure 333B, destinée à permettre son déplacement libre pendant la première étape, et qu'il ne soit actionné que lors de la seconde étape.

Dans l'hypothèse où la longueur du poussoir est variable (par exemple par effet télescopique), le câble 49 peut être guidé par exemple sous la forme d'une boucle, pour que la longueur de câble reste la même quelle que soit la position du poussoir.

Enfin, le bouton principal 331 comporte un pion 331A, positionné au repos dans l'extrémité basse de la portion inclinée de la lumière 333A.

Les **figures 9B et 10B** représentent le système lorsque le bouton principal 331 est actionné au cours de la première étape, jusqu'à un premier niveau.

Comme visible sur la **figure 10B****,** la translation du bouton principal 331 entraîne le déplacement du pion 331A à l'intérieur de la portion inclinée de la lumière 333A, jusqu'à atteindre la zone de flexion entre les deux portions de la lumière.

Ce déplacement entraîne la translation de la pièce 333 dans une direction indiquée par la flèche A visible sur les **figures 10B et 10C****.**

Pendant cette translation, la rainure supérieure 333B se déplace autour du câble 49 de déverrouillage du pion 46, celui-ci restant donc immobile.

En revanche, la translation de la pièce 333 entraîne l'actionnement du câble 60, ce qui induit le déverrouillage d'une première partie des poussoirs par rapport à une seconde partie des poussoirs.

L'utilisateur peut ainsi régler la hauteur des poussoirs 30, 31 en faisant coulisser la première partie de manière télescopique par rapport à la seconde partie.

Les **figures 9C et 10C** représentent le système lorsque le bouton principal 331 est actionné au cours de la seconde étape, jusqu'à un second niveau, et que le second bouton 332 est également actionné.

Le second niveau du premier bouton 331 ne peut être atteint que si le second bouton 332 est actionné.

Ceci entraîne à nouveau la translation de la pièce 333 dans la direction indiquée par la flèche A, qui agit sur le câble 49, qui agit lui-même sur la came 45 tel que décrit précédemment, de façon à faire passer le pion 46 d'une position verrouillée à une position déverrouillée, et permettre le pliage/dépliage de la poussette.

### 5.2.4 Opération de pliage/dépliage de la poussette

Les opérations de pliage et dépliage sont décrites ici plus précisément.

La **figure 11** représente la poussette en position dépliée, tandis que la **figure 12** représente la poussette en position pliée.

Il s'agit d'un pliage dit « à plat ».

En effet, lors du pliage, les roues arrière 23, 24 tendent à se rapprocher des poussoirs 31, 32 et à s'éloigner des roues avant 13, 14 de façon à former un ensemble plié compact sensiblement plat (figure 12).

Plus précisément, une opération de pliage se déroule comme suit.

Un utilisateur déverrouille le coulissement des bras poussoirs 31, 32, en appuyant conjointement sur le premier bouton 331 et le second bouton 332 localisés sur la poignée 33 de la poussette, de façon à faire sortir le pion de verrouillage 46 de son logement 112.

Il fait coulisser les poussoirs 31, 32 le long des glissières 110, 120 des montants avant 11, 12, par l'intermédiaire des chariots 40 selon la flèche B illustrée sur la figure 11.

Chaque chariot 40 entraîne en rotation libre la bielle 21, 22 qui lui est rattachée, la roue arrière 23, 24 portée par la bielle tendant alors à se rapprocher des poussoirs 31, 32 vers l'arrière de la poussette.

Les bielles 21, 22 étant également articulées par rapport aux montants 161, 162 du premier sous-ensemble « avant » 1, elles poussent ces derniers à effectuer une rotation tendant à les ramener vers les montants avant 11, 12 (c'est-à-dire une rotation dans le sens opposé au sens de rotation des bielles).

L'utilisateur continue à repousser les poussoirs 31, 32 jusqu'à ce que le pion de verrouillage 46 s'insère dans le second logement sous l'effet du ressort 461.

Dans cette position, les chariots 40 entrent sensiblement en contact avec l'extrémité des glissières 110, 120 respectives.

Cette position, illustrée sur la **figure 12****,** correspond à une position pliée, les poussoirs 31, 32 se trouvant alors sensiblement superposés aux montants avant 11, 12, c'est-à-dire placés au dessus des montants avant, sans contact direct avec ces derniers.

L'invention peut s'appliquer à d'autres types de poussettes mettant en œuvre un autre mode de pliage, par exemple un pliage dit « debout ».

Cette variante est illustrée sur les figures 13A à 13C.

La position des roues arrière étant dans ce cas modifiée par rapport au premier mode de réalisation, le résultat du pliage est différent : les roues arrière 23, 24 tendent à se rapprocher des roues avant 13, 14 et s'éloignent de la poignée 32.

De même que dans le mode de réalisation précédemment décrit, l'utilisateur déverrouille le coulissement des bras poussoirs, puis les fait coulisser le long des glissières 110, 120 des montants avant, par l'intermédiaire des chariots 40. Ensuite, le déplacement des chariots 40 agit sur les bielles 21, 22.

La cinématique de pliage (et donc le mouvement des différents éléments : poussoirs 31, 32, bielles 21, 22, montants 161, 162, etc.) est identique au mode de réalisation précédent.

Toutefois, étant donné que les roues arrière 23, 24 sont portées par les montants arrière 161, 162 et non plus par les bielles 21, 22 (comme c'est le cas dans le premier mode de réalisation), les roues arrière 23, 24 tendent à se rapprocher des roues avant 13, 14, l'extrémité libre des bielles 21, 22 s'éloignant alors des roues avant et tendant à se rapprocher des poussoirs vers l'arrière de la poussette selon un sens de rotation opposé au sens de rotation des roues arrière 23, 24 portées par les montants 161, 162.

## Revendications

1. Voiture d'enfant pliante comprenant un châssis comprenant, sur chacun de ses côtés, un ensemble formé de deux éléments mobiles en translation l'un par rapport à l'autre, lesdits éléments étant un montant avant (11, 12) et un bras poussoir (31, 32), un premier desdits éléments de chaque ensemble comportant une glissière (110, 120) formée dans la longueur dudit premier élément et présentant une ouverture sensiblement orientée vers l'ensemble situé de l'autre côté dudit châssis,
**caractérisée en ce qu'**un second desdits éléments est solidaire d'un chariot (40) portant un coulisseau (41) mobile dans ladite glissière (110, 120), lesdits éléments étant maintenus parallèles et sensiblement l'un au-dessus de l'autre avec un espace prédéterminé entre eux lors de l'opération de pliage/dépliage de la poussette.

2. Voiture d'enfant selon la revendication 1, **caractérisée en ce que** le premier desdits élément est un montant avant (11, 12) et le second desdits éléments est un bras poussoir (31, 32).

3. Voiture d'enfant selon la revendication 1, **caractérisée en ce que** le premier desdits élément est un bras poussoir (31, 32) et le second desdits éléments est un montant avant (11, 12).

4. Voiture d'enfant selon la revendication 1, **caractérisée en ce que** ledit espace prédéterminé ménage une distance comprise entre 1 et 6 millimètres, notamment entre 1 et 3 millimètres, entre lesdits éléments.

5. Voiture d'enfant selon la revendication 1, **caractérisée en ce que** ledit coulisseau (41) comprend au moins un patin de guidage.

6. Voiture d'enfant selon la revendication 1, **caractérisée en ce que** ledit coulisseau (41) comprend au moins un galet (48) mobile en rotation.

7. Voiture d'enfant selon les revendications 1 à 6, **caractérisée en ce qu'**elle comprend des moyens de verrouillage dans au moins une position d'au moins un desdits chariots (40) par rapport auxdits montants avant (11, 12).

8. Voiture d'enfant selon la revendication 7, **caractérisée en ce que** lesdits moyens de verrouillage comprennent au moins un pion de verrouillage (46), apte à coopérer avec au moins un logement de verrouillage (111, 112) prévu à cet effet dans la glissière (110, 120) correspondante.

9. Voiture d'enfant selon la revendication 8, **caractérisée en ce que** ladite glissière (110, 120) comprend au moins deux logements de verrouillage (111, 112), correspondant respectivement à une position pliée et à une position dépliée de ladite voiture d'enfant.

10. Voiture d'enfant selon l'une quelconque des revendications 8 et 9, **caractérisée en ce que** ledit pion (46) est mobile perpendiculairement à l'axe dudit montant avant (11, 12), pour passer d'une position verrouillée à une position déverrouillée, sous l'action d'un câble (49) de déverrouillage.

11. Voiture d'enfant selon l'une quelconque des revendications 1 à 10, **caractérisée en ce que** lesdits bras poussoirs (31, 32) forment les montants latéraux d'un cadre comprenant en outre une traverse supérieure (33) formant guidon et une traverse inférieure (34).

12. Voiture d'enfant selon l'une quelconque des revendications 1 à 11, **caractérisée en ce qu'**elle comprend deux montants arrière (21, 22) dont une extrémité inférieure est reliée à moins une roue arrière (23, 24) ou un bloc de roues arrière, et dont une extrémité supérieure est montée libre en pivotement sur ledit chariot (40).

13. Voiture d'enfant selon l'une quelconque des revendications 1 à 12, **caractérisée en ce que** chacun desdits chariots (40) porte un premier élément d'accrochage (42) apte à coopérer avec un second élément complémentaire porté par un support d'enfant.

14. Voiture d'enfant selon l'une quelconque des revendications 1 à 13, **caractérisée en ce que** lesdits poussoirs (31, 32) sont chacun formés de deux portions télescopiques.

## Patentansprüche

1. Zusammenklappbarer Kinderwagen mit Gestell, das auf jeder seiner Seiten eine Einheit umfasst, die aus zwei relativ zueinander verschiebbaren Elementen gebildet ist, wobei die Elemente eine Vorderstrebe (11, 12) und ein Schubarm (31, 32) sind, wobei ein erstes der Elemente jeder Einheit eine Gleitschiene (110, 120) aufweist, die entlang der Länge des ersten Elements ausgebildet ist und eine Öffnung aufweist, die im Wesentlichen auf die an der anderen Seite des Gestells befindliche Einheit ausgerichtet ist,
**dadurch gekennzeichnet, dass** ein zweites der Elemente fest mit einem Schlitten (40) verbunden ist, der einen in der Gleitschiene (110, 120) beweglichen Schieber (41) aufweist, wobei die Elemente während des Zusammenklappens/Auseinanderklappens des Kinderwagens parallel und im Wesentlichen übereinander mit einem vorbestimmten Abstand zwischen ihnen gehalten werden.

2. Kinderwagen nach Anspruch 1, **dadurch gekennzeichnet, dass** das erste der Elemente eine Vorderstrebe (11, 12) ist und das zweite der Elemente ein Schubarm (31, 32) ist.

3. Kinderwagen nach Anspruch 1, **dadurch gekennzeichnet, dass** das erste der Elemente ein Schubarm (31, 32) ist und das zweite der Elemente eine Vorderstrebe (11, 12) ist.

4. Kinderwagen nach Anspruch 1, **dadurch gekennzeichnet, dass** der vorbestimmte Abstand eine Distanz zwischen 1 und 6 Millimetern, insbesondere zwischen 1 und 3 Millimetern, zwischen den Elementen bildet.

5. Kinderwagen nach Anspruch 1, **dadurch gekennzeichnet, dass** der Schieber (41) mindestens einen Gleitschuh umfasst.

6. Kinderwagen nach Anspruch 1, **dadurch gekennzeichnet, dass** der Schieber (41) mindestens eine drehbewegliche Rolle (48) umfasst.

7. Kinderwagen nach den Ansprüchen 1 bis 6, **dadurch gekennzeichnet, dass** er Verriegelungsmittel in mindestens einer Position von mindestens einem der Schlitten (40) in Bezug auf die Vorderstreben (11, 12) umfasst.

8. Kinderwagen nach Anspruch 7, **dadurch gekennzeichnet, dass** die Verriegelungsmittel mindestens einen Verriegelungsstift (46) aufweisen, der geeignet ist, um mit mindestens einer Riegelaufnahme (111, 112) zusammenzuwirken, die zu diesem Zweck in der entsprechenden Gleitschiene (110, 120) vorgesehen ist.

9. Kinderwagen nach Anspruch 8, **dadurch gekennzeichnet, dass** die Gleitschiene (110, 120) mindestens zwei Riegelaufnahmen (111, 112) umfasst, die jeweils einer zusammengeklappten Position und einer auseinandergeklappten Position des Kinderwagens entsprechen.

10. Kinderwagen nach einem der Ansprüche 8 und 9, **dadurch gekennzeichnet, dass** der Stift (46) senkrecht zur Achse der Vorderstrebe (11, 12) beweglich ist, um unter der Wirkung einer Entriegelungsschnur (49) von einer verriegelten Position in eine entriegelte Position überzugehen.

11. Kinderwagen nach einem der Ansprüche 1 bis 10, **dadurch gekennzeichnet, dass** die Schubarme (31, 32) die Seitenstreben eines Rahmens bilden, der weiterhin eine den Lenker bildende obere Querstrebe (33) und eine untere Querstrebe (34) umfasst.

12. Kinderwagen nach einem der Ansprüche 1 bis 11, **dadurch gekennzeichnet, dass** er zwei hintere Streben (21, 22) umfasst, deren eines untere Ende mit mindestens einem Hinterrad (23, 24) oder einem Hinterradblock verbunden ist, und deren eines obere Ende frei schwenkbar auf dem Schlitten (40) angebracht ist.

13. Kinderwagen nach einem der Ansprüche 1 bis 12, **dadurch gekennzeichnet, dass** jeder der Schlitten (40) ein erstes Einhängeelement (42) aufweist, das geeignet ist, um mit einem zweiten ergänzenden Element zusammenzuwirken, das sich an einer Kindertrage befindet.

14. Kinderwagen nach einem der Ansprüche 1 bis 13, **dadurch gekennzeichnet, dass** die Schubarme (31, 32) jeweils aus zwei Teleskopteilen gebildet sind.

## Claims

1. Folding carriage for a child comprising a frame including, on each of its sides, an assembly composed of two elements free to move in translation relative to each other, said elements being a front upright (11, 12) and a push-piece arm (31, 32), a first of said elements in each assembly comprises a slide (110, 120) formed in the length of said first element and having an opening approximately facing the assembly located on the other side of said frame,
**characterized in that** a second of said elements is fixed to a trolley (40) carrying a traveller (41) free to move in said slide (110, 120), said elements being maintained parallel and substantially one above the other with a predetermined space between them during the folding/unfolding operation of the child carriage.

2. Child carriage according to claim 1, **characterized in that** the first of said elements is a front upright (11, 12) and the second of said elements is a push-piece arm (31, 32).

3. Child carriage according to claim 1, **characterized in that** the first of said elements is a push-piece arm (31, 32) and the second of said elements is a front upright (11, 12).

4. Child carriage according to claim 1, **characterized in that** said predetermined space provides a gap between said elements comprised between 1 and 6 millimeters, particularly between 1 and 3 millimeters.

5. Child carriage according to claim 1, **characterized in that** said traveller (41) includes at least one guide pad.

6. Child carriage according to claim 1, **characterized in that** said traveller (41) includes at least one roller (48) free to move in rotation.

7. Child carriage according to either of claims 1 to 6, **characterized in that** it includes means of locking at least one of said trolleys (40) in at least one position relative to the front uprights (11, 12).

8. Child carriage according to claim 7, **characterized in that** said means of locking comprise at least one locking pin (46) capable of cooperating with at least one lock housing (111, 112) provided for this purpose in the corresponding slide (110, 120).

9. Child carriage according to claim 8, **characterized in that** said slide (110, 120) comprises at least two lock housings (111, 112), respectively corresponding to a folded position and an unfolded position of said carriage.

10. Child carriage according to either of claims 8 and 9, **characterized in that** said pin (46) is free to move perpendicular to the axis of said front upright (11, 12), to change from a locked position to an unlocked position, under the action of an unlocking cable (49).

11. Child carriage according to either of claims 1 to 10, **characterized in that** said push-piece arms (31, 32) form the lateral uprights of a frame also comprising an upper crosspiece (33) forming a handlebar, and a lower cross piece (34).

12. Child carriage according to either of claims 1 to 11, **characterized in that** it includes two rear uprights (21, 22), a lower end of which is connected to at least one rear wheel (23, 24) or a rear wheel module, and an upper end of which is installed free to pivot on said trolley (40).

13. Child carriage according to either of claims 1 to 12, **characterized in that** each of said trolleys (40) carries a first attachment element (42) capable of cooperating with a second complementary element carried by a child support.

14. Child carriage according to either of claims 1 to 13, **characterized in that** each of said push-pieces (31, 32) is composed of two telescopic portions.
